# EUROPÄISCHE PATENTSCHRIFT

(11) **EP 0 649 619 B1**
(45) Veröffentlichungstag und Bekanntmachung des Hinweises auf die Patenterteilung: **29.12.1997**
(21) Anmeldenummer: 94108564.9
(22) Anmeldetag: 03.06.1994
(51) Int. Cl.: A47C 31/02

(54) **Verankerungsleiste für einen Einzugstab zur Profilformung von Polstermaterialien**
An anchoring strip for an insertion strip for profiling upholstery
Bande d'ancrage pour bande d'insertion pour profiler des rembourrages

(30) Priorität: 21.10.1993 DE 9316093 U
(43) Veröffentlichungstag der Anmeldung: 26.04.1995
(73) Patentinhaber: Tillner, Thomas, 49205 Hasbergen (DE)
(72) Erfinder: Tillner, Alfred, D-49191 Belm (DE)
(74) Vertreter: Busse & Busse Patentanwälte

(56) Entgegenhaltungen:
- FR-A- 2 679 895
- US-A- 3 794 378

## Beschreibung

Die Erfindung betrifft eine Verankerungsleiste für einen Einzugstab zur Profilformung von an ihrer Außenseite durch einen Bezugstoff abgedeckten Polstermaterialien aus Schaumstoff bei Polstermöbeln und dgl. Polsterteilen wie Sitz- und/oder Rückenteilen, wobei der Einzugstab entlang einem Längsrand eine mit dem Bezugstoff verbindbare Annähfahne trägt.

Einzugstäbe zur Profilformung werden bei Polstermöbeln, aber auch bei anderen Polsterteilen wie Sitz- und/oder Rückenteilen von insbesondere Autositzen, dazu verwendet, das auf einer geeigneten Unterlage angebrachte Schaumstoff-Polstermaterial in die gewünschte, sitzgerechte Form zu bringen. Der Bezugstoff wird dabei an die Annähfahne des Einzugstabes angenäht, und der so vorbereitete Einzugstab wird sodann im wesentlichen quer zur äußeren Oberfläche des auf dem Polstermaterial aufliegenden Bezugstoffes in das Polstermaterial durch einen Materialschlitz hineingezogen und festgelegt, wodurch eine nahtähnliche sog. Blindabheftung mit entsprechenden Profilwölbungen beidseits der Blindabheftung erzeugt wird.

Zur Festlegung des Einzugstabes im Polstermaterial werden dabei üblicherweise Metalldrähte oder -stäbe verwendet, die sich durch das Polstermaterial hindurcherstrecken. Die Verwendung solcher Metalldrähte oder -stäbe ist material- und anbringungstechnisch aufwendig und erweist sich für eine materialbezogene Entsorgung gebrauchter Sitz- und Rückenteile, bei der die Metallteile einerseits und der von einem geeigneten Kunststoff gebildete Schaumstoff, z.B. Polyurethanschaum, auf unterschiedlichen Wegen entsorgt werden müssen, als ungünstig, da sich die Metalldrähte oder -stäbe nur sehr schwer bzw. mit einem unter wirtschaftlichen Gesichtspunkten nicht vertretbaren Aufwand aus dem Schaumstoffmaterial herauslösen lassen.

US-A-3 794 378 beschreibt eine Verankerungsleiste gemäß dem Oberbegriff des Patentanspruchs 1. Die entlang der Längserstreckung des flexiblen Basissteges vorgesehenen, zur Außenseite des Polsterteils weisenden Aufnahmeglieder für den Einzugstab sind hierbei von einander gegenüberliegenden Haltelippen gebildet, die sich in Längsrichtung ohne Unterbrechung bzw. kontinuierlich entlang der Verankerungsleiste erstrecken. Um den Einzugstab, der an seinem freien Ende in seitlich abstehenden Leisten ausläuft, zwischen die der Länge nach durchlaufenden Haltelippen in einen zwischen diesen belassenen schmalen Spalt einzudrücken, ist ein hoher Kraftaufwand erforderlich.

FR-A-2 679 895 beschreibt einen Einzugstab zur Profilformung von an ihrer Außenseite durch einen Bezugstoff abgedeckten Polstermaterialien aus Schaumstoff bei Polstermöbeln und dgl. Polsterteilen wie Sitz- und/oder Rückenteilen, wobei der Einzugstab entlang einem Längsrand eine mit dem Bezugstoff verbindbare Annähfahne trägt. Für die Verankerung des Einzugstabes im Inneren des Polsterteils werden hierbei einzelne, mit gegenseitigem Abstand entlang der herzustellenden Blindnaht angeordnete Verriegelungsglieder in Form hohler Ringe verwendet, die gesondert an den jeweils vorgesehenen Punkten in das Polstermaterial eingesetzt werden. Diese einzelnen Verankerungselemente sind jeweils mit einem Aufnahmeglied in der Grundgestalt eines C-Profils als einstückig angeformter Teil des von einem Kunststoff-Formkörper gebildeten Verankerungselements versehen, wobei der Innenraum des C-Profils einen dem Querschnitt des Einzugstabes angepaßten Aufnahmeraum für diesen bildet. Die Verankerung des Einzugstabes mit den einzelnen Verankerungselementen kann bei dieser bekannten Ausgestaltung zwar grundsätzlich von Hand durchgeführt werden, jedoch sind für einen mechanisierten Arbeitsablauf spezielle Montagedorne für die Verbindung des Einzugstabes mit den einzelnen Verankerungselementen vorgesehen. Dabei wird der freie Schenkel des C-Profils beim Einsetzvorgang in der Weise verformt, daß der Einzugstab in den Aufnahmeraum des C-Profils gelangen kann, woraufhin der freie Schenkel in seine Ausgangslage zurückkehrt, in der er an einer geeigneten Stützfläche zur Verankerung des Einzugstabes anliegt.

Der Erfindung liegt die Aufgabe zugrunde, eine Verankerungsleiste für einen Einzugstab der eingangs beschriebenen Art zu schaffen, die die Verwendung von Metallteilen im Polstermaterial zur Festlegung des Einzugstabes im Polstermaterial entbehrlich macht und keine entsorgungstechnischen Schwierigkeiten bereitet.

Diese Aufgabe wird nach der Erfindung durch eine Ausbildung der Verankerungsleiste gemäß dem Patentanspruch 1 gelöst. Bei dieser Ausgestaltung gewährleistet die Verankerungsleiste mit ihren Aufnahmegliedern eine sichere Festlegung des mit dem Bezugstoff über die Annähfahne eingezogenen Einzugstabs und erfordert andererseits im Falle einer Entsorgung eines entsprechend ausgerüsteten Polsterteils, da sie aus einem Kunststoff-Formkörper besteht, keine aufwendige Materialtrennung des Polsterteils für dessen materialspezifische Entsorgung. Die Verankerungsleiste bildet somit mit dem Einzugstab eine von der Erfindung mitumfaßte, aus Kunststoff bestehende Vorrichtung zur Profilformung von außenseitig durch einen Bezugstoff abgedeckten Polstermaterialien aus Schaumstoff, die einfach verarbeitet werden kann, einen sicheren Halt für den eingezogenen Bezugstoff bietet und gemeinsam mit dem das Polstermaterial bildenden Schaumstoff entsorgt werden kann.

Weitere Merkmale und Vorteile der Erfindung ergeben sich aus den Unteransprüchen und der nachstehenden Beschreibung in Verbindung mit der Zeichnung, in der ein Ausführungsbeispiel des Gegenstands der Erfindung schematisch veranschaulicht ist. In der Zeichnung zeigt
- Fig. 1: eine Ansicht eines Autositzes mit eingesetzter Verankerungsleiste vor dem Einziehen des Bezugstoffes mittels des Einzugstabes,
- Fig. 2: eine Seitenansicht einer Verankerungsleiste mit einem mit dieser zu einem Halteeingriff verrasteten Einzugstab mit Annähfahne und
- Fig. 3: einen Querschnitt durch die von der Verankerungsleiste und dem Einzugstab gebildete Profilformvorrichtung gemäß Fig. 2 im mit dem Polstermaterial verankerten Zustand und mit dem eingezogenen Bezugstoff.

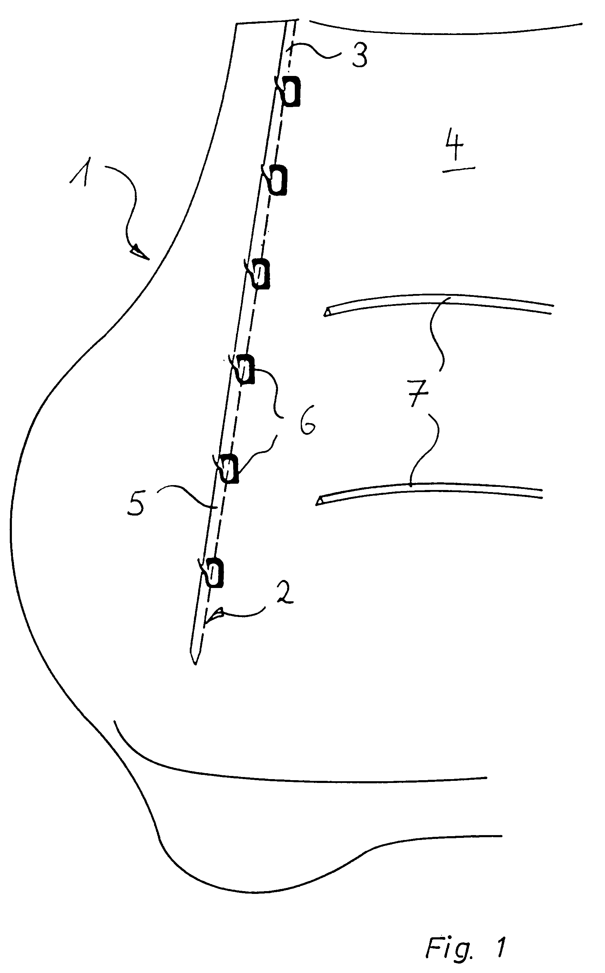

Aus Fig. 1 ist in der dargestellten, auf eine Hälfte beschränkten Ansicht eines Polsterteils wie eines Sitzteils 1 als Teil eines Autositzes eine als Ganzes mit 2 bezeichnete Verankerungsleiste in einem Einführungsspalt 3 im Polstermaterial 4 des Sitzteils 1 ersichtlich, die den dargestellten Verlauf entsprechend dem gewünschten Verlauf der im Sitzteil 1 zu erzeugenden Blindnaht aufweist. Die Verankerungsleiste 2 besteht aus einem einstückig aus einem geeigneten thermoplastischen Kunststoff, z.B. Polypropylen, gebildeten Formkörper, der einen senkrecht zu seiner Hauptebene flexiblen Basissteg 5 aufweist, entlang dessen Längserstreckung einzelne Aufnahmeglieder 6 mit gegenseitigem Abstand voneinander vorgesehen sind. Der Basissteg 5 ermöglicht eine Biegeverlegung der Verankerungsleiste 2 in eine Richtung senkrecht zur Hauptebene des Basisstegs 5, d.h. nach oben oder unten, zur Erzielung des gewünschten Verlaufs im Polstermaterial 4 bei der dargestellten Ausrichtung und ähnlichen Konturen, wie sie beispielsweise bei 7 rein schematisch für eine quer über das Sitzteil 1 verlaufende Profilformung angegeben sind.

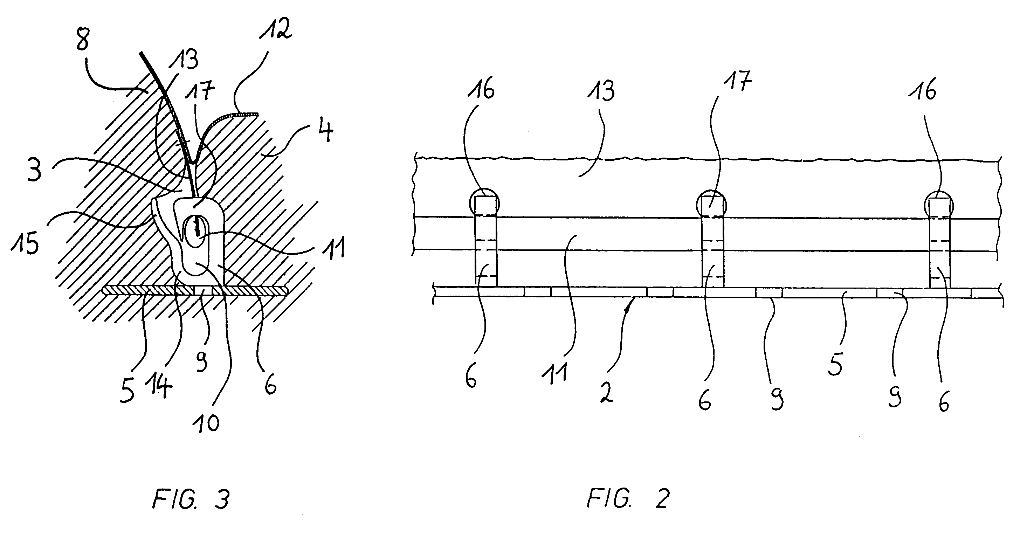

Wie sich insbesondere den Figuren 2 und 3 entnehmen läßt, weist der Basissteg 5 die Form eines Flachprofils auf, das quer zur Längserstreckung der Aufnahmeglieder 6 gerichtet ist, die ihrerseits zur Außenseite 8 des Polstermaterials 4 weisen. Das Polstermaterial 4 besteht aus einem geeigneten Schaumstoff, z.B. einem Polyurethanschaum, mit dem der Basissteg 5 der Verankerungsleiste 2 bei der Herstellung des Sitzteiles 1 in einer entsprechenden Schäumungsform verschäumt wird. Zur Verbesserung des auf diese Weise erzeugten Verankerungseingriffs des Basissteges 5 mit dem Polstermaterial 4 können im Basissteg 5 in geeigneten Abständen zwischen den Aufnahmegliedern 6 Durchgangslöcher 9 vorgesehen sein, die von dem Schaumstoff 4 durchschäumt werden.

Die Aufnahmeglieder 6 besitzen die Grundgestalt eines C-Profils, das einen Aufnahmeraum 10 für einen Einzugstab 11 bildet, der seinerseits aus einem thermoplastischen Kunststoff, z.B. wie die Verankerungsleiste 2 aus Polypropylen, besteht und entlang einem Längsrand eine mit dem Bezugstoff 12 zu vernähende Annähfahne 13 trägt. Die Annähfahne 13 besteht aus einem Vlies, Gittergewebe oder dgl. textilem Material, das zwischen zwei Schenkel des Einzugstabs 11 mit diesem fest verschweißt ist.

Die offene Seite des C-Profils der Aufnahmeglieder 6 ist von einem einstückig an dieses angeformten, elastisch nach außen verbiegbaren Profilschenkel 14 im wesentlichen geschlossen und bildet auf diese Weise einen Karabinerhaken, in den der Einzugstab 11 mit seinem der Annähfahne 13 gegenüberliegenden Längsrand von außen durch den Materialspalt 3 hindurch eingedrückt wird, um in den Aufnahmeraum 10 zu gelangen, dessen Querschnitt dem Einzugstab 11, insbesondere in seinem oberen Bereich, angepaßt ist. Beim Eindrücken des Einzugstabes 11 verformt sich der Profilschenkel 14 elastisch nach außen um anschließend in seine insbesondere aus Fig. 3 ersichtliche Ausgangslage zurückzufedern.

Zur Erleichterung der Einführbewegung des Einzugstabs 11 mit dem über die Annähfahne 13 angenähten Bezugstoff 12 weist der Profilschenkel 14 einen zur Außenseite 8 des Sitzteils bzw. des Schaumstoffs 4 gerichteten Schenkelansatz 15 auf, der vom C-Profil wegdivergiert und mit diesem ein Einführungsmaul für den Einzugstab 11 bildet.

Für den Rasteingriff des Einzugstabes 11 in den Aufnahmegliedern 6 in der gezeigten Weise ist die Annähfahne 13 gegenüber jedem Eingriffsbereich des Einzugstabs 11 mit einem Aufnahmeglied 6 mit einer Durchstecköffnung 16 für den angrenzenden oberen Profilschenkel 17 des Aufnahmeglieds 6 versehen.

Aus Fig. 3 ist der V-förmig eingezogene Bereich des Bezugstoffes 12 ersichtlich, der im mit den Aufnahmegliedern 6 verrasteten Zustand des Einzugstabes 11 erzeugt wird, wobei sich an diesen Bereich beidseitig die gewünschten Profilwölbungen für das Sitzteil 1 als Teil eines Autositzes anschließen. Die Innenseite des Profilschenkels 17 bildet dabei ein Widerlager bzw. eine Anlagefläche innerhalb des Aufnahmeraums 10 für den entsprechend konturierten Einzugstab 11, so daß dieser sicher in den Aufnahmegliedern 6 gehalten und gleichzeitig der Bezugstoff 12 über die Annähfahne 13 in der nach innen eingezogenen Stellung fixiert ist.

## Patentansprüche

1. Verankerungsleiste (2) für einen Einzugstab (11) zur Profilformung von an ihrer Außenseite durch einen Bezugstoff (12) abgedeckten Polstermaterialien (4) aus Schaumstoff bei Polstermöbeln und dgl. Polsterteilen (1) wie Sitz- und Rückenteilen, wobei der Einzugstab (11) entlang einem Längsrand eine mit dem Bezugstoff (12) verbindbare Annähfahne (13) trägt und die Verankerungsleiste (2) aus einem einstückig gebildeten Kunststoff-Formkörper besteht, der einen mit dem Polstermaterial (4) verankerbaren flexiblen Basissteg (5) aufweist und entlang dessen Längserstreckung mit zur Außenseite (8) des Polsterteils (1) weisenden Aufnahmegliedern (6) für den Einzugstab (11) versehen ist, mit denen dieser von der Außenseite (8) des Polsterteils (1) her zu einem festen Halteeingriff verrastbar ist, **dadurch gekennzeichnet**, daß die Aufnahmeglieder (6) als einzelne in Abständen voneinander angeordnete Aufnahmeglieder (6) in der Grundgestalt eines C-Profils an dem einstückig gebildeten Kunststoff-Formkörper vorgesehen sind, der Innenraum des C-Profils einen dem Querschnitt des Einzugstabes (11) angepaßten Aufnahmeraum (10) für diesen bildet und die offene Seite des C-Profils von einem einstückig an dieses angeformten, elastisch nach außen verbiegbaren Profilschenkel (14) im wesentlichen geschlossen ist, der einen zur Außenseite (8) des Polsterteils (1) gerichteten, vom C-Profil wegdivergierenden Schenkelansatz (15) aufweist, der ein Einführungsmaul für den Einzugstab (11) bildet.

2. Verankerungsleiste (2) nach Anspruch 1, dadurch gekennzeichnet, daß der Basissteg (5) die Form eines quer zur Längserstreckung der Aufnahmeglieder (6) ausgerichteten Flachprofils aufweist.

3. Verankerungsleiste (2) nach Anspruch 1 oder 2, dadurch gekennzeichnet, daß der Basissteg (5) mit von dem Polstermaterial (4) durchschäumbaren Durchgangslöchern (9) versehen ist.

4. Vorrichtung zur Profilformung von außenseitig durch einen Bezugstoff (12) abgedeckten Polstermaterialen (4) aus Schaumstoff bei Polstermöbeln und dgl. Polsterteilen (1) wie Sitz- und Rückenteilen, bestehend aus einer Verankerungsleiste (2) nach einem der Ansprüche 1 bis 3 und einem Einzugstab (11) aus Kunststoff mit einer gesondert hergestellten Annähfahne (13) für den Bezugstoff (12), dadurch gekennzeichnet, daß die Annähfahne (13) gegenüber jedem Eingriffsbereich des Einzugstabs (11) mit einem Aufnahmeglied (6) mit einer Durchstecköffnung (16) für einen angrenzenden Teil (17) des Aufnahmeglieds (6) versehen ist.

## Claims

1. An anchoring strip (2) for a pull-in rod (11) for forming the profile on upholstery material (4) covered on their outside by a covering material (12) and consisting of foam material in the case of upholstered furniture and the like upholstered parts (1) such as seat and back parts, the pull-in rod (11) carrying along a longitudinal edge an acceptance tab (13) which can be connected to the covering material (12) while the anchoring strip (2) consists of, formed in one piece, a synthetic plastics moulding which comprises a flexible base web (5) which can be anchored on the upholstery material (4) and which has along its longitudinal extension receiving members (6) directed towards the outside (8) of the upholstered part (1) and for the pull-in rod (11) and with which this latter can be engaged from the outside (8) of the upholstered part (1) to establish a rigid holding engagement, characterised in that the receiving members (6) are provided as individual spaced-apart receiving members (6) in the basic form of a C-profile on the integrally formed synthetic plastics mouldings, the interior of the C-profile having adapted to the cross-section of the pull-in bar (11) a receiving space (10) for this while the open side of the C-profile is substantially closed by a profiled member (14) adapted to be bendable elastically outwardly while being integrally moulded on the open side of the C-shaped profile, the outwardly directed profile member (14) having directed towards the outside of the upholstered part (1) and diverging from the C-shaped profile a projection (15) which forms an insertion mouth for the pull-in rod (11).

2. An anchoring strip (2) according to claim 1, characterised in that the base web (5) assumes the form of a flat profile orientated crosswise to the longitudinal extension of the receiving members (6).

3. An anchoring strip (2) according to claim 1 or 2, characterised in that the base web (5) is provided with through bores (9) through which the upholstery material (4) can foam.

4. An apparatus for the profiled shaping of upholstery materials (4) of foam material covered on the outside by a covering material (12) and in the case of upholstery furniture and the like upholstered parts (1) such as seat and back rests of chairs, consisting of an anchoring strip (2) according to one of claims 1 to 3 and a pull-in bar (11) of synthetic plastics material with a separately produced stitch-on tab (13) for the covering material (12), characterised in that opposite each area of engagement the stitch-on tab (13) is provided with a receiving member (6) with a punched aperture (16) for an adjacent part (17) of the receiving member (6).

## Revendications

1. Bande d'ancrage (2) pour une baguette de rentrage (11) destinée à conférer un profil à des matériaux mousses de rembourrage (4) recouverts à l'extérieur par un tissu de revêtement (12) dans le cas de meubles rembourrés et de parties rembourrées analogues (1), telles que des sièges et des dossiers, sachant que la baguette de rentrage (11) porte, le long d'un bord longitudinal, un ruban à coudre (13) pouvant être attaché au tissu de revêtement (12) et que la bande d'ancrage (2) est constituée d'un corps façonné en matière plastique venu d'une seule pièce, qui comporte une âme souple (5), pouvant être ancrée au matériau de rembourrage (4), et est pourvu, sur toute sa longueur, d'éléments de réception (6), orientés vers l'extérieur (8) de la partie de rembourrage (1), pour la baguette de rentrage (11), dans lesquels cette dernière peut venir s'encliqueter de l'extérieur (8) de la partie de rembourrage (1) pour établir une liaison de retenue fixe, caractérisée en ce que les éléments de réception (6) se présentent sous la forme d'éléments de réception individuels (6) disposés à une certaine distance les uns des autres et ayant la forme de base d'un profil en C au niveau d'un corps moulé en matière plastique venu d'une seule pièce, qui forme, à l'intérieur du profil en C, un espace de réception (10) pour la baguette de rentrage (11) adapté à la section transversale de cette dernière et le côté ouvert du profil en C est sensiblement fermé par une branche (14) du profil venue d'une seule pièce avec ce dernier et pouvant être fléchie de manière élastique vers l'extérieur, qui présente un prolongement de branche (15) orienté vers l'extérieur (8) de la partie de rembourrage (1) et divergeant du profil en C, qui forme une ouverture de guidage pour la baguette de rentrage (11).

2. Bande d'ancrage (2) suivant la revendication 1, caractérisée en ce que l'âme (5) a la forme d'un profil plat orienté transversalement à la direction longitudinale des éléments de réception (6).

3. Bande d'ancrage (2) suivant la revendication 1 ou 2, caractérisée en ce que l'âme (5) est pourvue de trous débouchants (9) pouvant être traversés par le matériau de rembourrage (4) au cours de son expansion en mousse.

4. Dispositif pour conférer un profil à des matériaux de rembourrage mousses (4) recouverts à l'extérieur par un tissu de revêtement (12) dans le cas de meubles rembourrés et de parties rembourrées analogues (1), telles que des sièges et des dossiers, constitué d'une bande d'ancrage (2) suivant l'une quelconque des revendications 1 à 3 et d'une baguette de rentrage (11) en matière plastique avec un ruban à coudre (13) fabriqué séparément pour le tissu de revêtement (12), caractérisé en ce que le ruban à coudre (13) est pourvu, devant chaque région d'attache de la baguette de rentrage (11) avec un élément de réception (6), d'une ouverture traversante (16) pour une partie adjacente (17) de l'élément de réception (6).
